Europäisches Patentamt

European Patent Office

Office européen des brevets

(11) Publication number: **0 497 992 A1**

# EUROPEAN PATENT APPLICATION

(21) Application number: **90109159.5**

(51) Int. Cl.5: **C22C 38/18**, B01J 23/86

(22) Date of filing: **15.05.90**

(30) Priority: **16.05.89 JP 122280/89**
**24.11.89 JP 303095/89**
**09.03.90 JP 564088/90**

(43) Date of publication of application:
**12.08.92 Bulletin 92/33**

(84) Designated Contracting States:
**DE FR GB**

(71) Applicant: **NIPPON STEEL CORPORATION**
**6-3 Otemachi 2-chome Chiyoda-ku**
**Tokyo 100(JP)**

(72) Inventor: **Sato, Yuichi, c/o Nippon Steel**
**Corporation**
**L&D Laboratories-I, 1618 Ida, Nakahara-Ku**
**Kawasaki-shi, Kanagawa(JP)**
Inventor: **Sato, Takashi, c/o Nippon Steel**
**Corporation**
**L&D Laboratories-I, 1618 Ida, Nakahara-Ku**
**Kawasaki-shi, Kanagawa(JP)**

Inventor: **Yamanaka, Mikio, c/o Nippon Steel**
**Corporation**
**L&D Laboratorie-II, 5-10-1 Fuchinobe**
**Sagamihara-shi, Kanagawa(JP)**
Inventor: **Ohmura, Kiichi, c/o Nippon Steel**
**Corporation**
**L&D Laboratories-II, 5-10-1 Fuchinobe**
**Sagamihara-shi, Kanagawa(JP)**
Inventor: **Shiraishi, Toshiyuki, c/o Nippon**
**Steel Corporation**
**Lab.-III, 1-1-1, Edamitsu, Yahatahigashi-ku**
**Kitakyushu-shi, Fukuoka(JP)**
Inventor: **Ogata, Masahiko, c/o Nippon Steel**
**Corporation**
**6-3, Otemachi, 2-chome**
**Chiyoda-ku, Tokyo(JP)**

(74) Representative: **Kador & Partner**
**Corneliusstrasse 15**
**W-8000 München 5(DE)**

(54) **Stainless steel foil for automobile exhaust gaspurifying catalyst carrier and process for preparation thereof.**

(57) Disclosed is a stainless steel foil for an automobile exhaust gas-purifying catalyst, which is a cold-rolled, rapidly solidified steel foil comprising 1 to 20% by weight, preferably 5.5 to 20% by weight, of Al, 5 to 30% by weight of Cr, up to 2% by weight of Mn, up to 3% by weight of Si and up to 1% by weight of C, the balance being Fe and unavoidable impurities. The steel can further contain one or both of (a) up to 2% by weight of at least one element selected from the group consisting of Y, Sc and REM and (b) up to 2% by weight of at least one element selected from the group consisting of Ti, Nb, Zr, Hf, V, Ta, Mo and W. The steel foil has a thickness between 30 and 70 $\mu$m. This stainless steel foil is prepared by a process comprising rapid-solidifying a melted steel having the above-mentioned chemical composition to form a thin strip having a thickness smaller than 0.2 mm, and cold-rolling the as-cast thin strip.

EP 0 497 992 A1

**STAINLESS STEEL FOIL FOR AUTOMOBILE EXHAUST GAS-PURIFYING CATALYST CARRIER AND PROCESS FOR PREPARATION THEREOF**

## BACKGROUND OF THE INVENTION

### (1) Field of the Invention

The present invention relates to a foil of an Al-containing stainless steel having a superior oxidation resistance and strength at high temperatures and suitable for use as a catalyst carrier for purifying an exhaust gas of an automobile or the like, and to a process for the preparation thereof. Note, it is difficult to reduce the thickness of an Al-containing stainless steel.

### (2) Description of the Related Art

Ceramics long have been used as the catalyst carrier for purifying exhaust gases from combustion systems. For example, there can be mentioned a monolithic catalyst carrier for furifying an automobile exhaust gas, which comprised of ceramic honeycomb formed by firing a ceramic material composed mainly of cordierite in a honeycomb shape, a porous $\gamma$-$Al_2O_3$ powder impregnated with a noble metal such as Pt or Pd which is coated on the said honeycomb and metalic outer shell which holds the ceramic honeycomb. This ceramic honeycomb is defective, however, in that the resistance thereof to mechanical shock is low and the air permeation resistance is high because of its large wall thickness. Recently, a metal honeycomb has been proposed as a substitute for this ceramic honeycomb.

An important property required for this metal carrier is a superior oxidation resistance, and as a honeycomb material satisfying this requirement, Japanese Examined Patent Publication No. 63-24740 proposes an Al-containing ferritic stainless steel foil. By using this Al-containing ferritic stainless steel foil it becomes possible to improve the mechanical strength, because the wall thickness can be reduced and the air permeation resistance lowered. Furthermore, to ensure that this catalyst work efficiently, preferably the catalyst carrier is set at a position as close as possible to the combustion system. Accordingly, an Al-containing stainless steel foil having a superior strength at a higher temperature, is also desired recently, and an Al-containing austenitic stainless steel foil is regarded as a promising example of this kind of steel foil.

This metal carrier is prepared by a process in which an Al-containing stainless steel is formed into flat and corrugated foils having a thickness of scores of $\mu$m, these coils are alternately disposed to form a layer or wound to form a cylindrical honeycomb, and this layer or cylindrical honeycomb is held in a metal outer shell instead of the above-mentioned ceramic honeycomb.

Several processes have been proposed for preparing an Al-containing stainless steel foil for the metal carrier. For example, there can be mentioned a process in which an Al-containing stainless steel is cast into a casting mold to form an ingot or slab and the ingot or slab is formed into a foil having a thickness of scores of $\mu$m by combining hot rolling and cold rolling with annealing and descaling, and a process, disclosed in Japanese Unexamined Patent Publication No. 56-96726, in which a foil is peeled from the surface of a round bar of a high-Al ferritic stainless steel.

These conventional techniques of preparing an Al-containing stainless steel foil for a metal carrier involve various difficulties; in the process in which a foil for a carrier is prepared by hot and cold rolling an ingot or slab, to roll a stainless steel which has an inherently poor cold workability to a thickness of scores of $\mu$m (preferably 30 to 70 $\mu$m), annealing and descaling steps must be added several times during the rolling operation, which results in increased manufacturing costs, and further, since the amount of Al which will effectively increase the oxidation resistance of stainless steel must be limited in view of the rolling workability. As the Al content is increased, the rolling workability of stainless steel becomes much poorer, and the content of Al which will effectively improve the oxidation resistance must be limited. To the inventors' knowledge, when the Al content is higher than about 5.5% by weight (all of "%" are by weight hereinafter), it is almost impossible to prepare a foil having a thickness of about 30 to about 70 $\mu$m from a usual ingot only by rolling on an industrial scale.

Furthermore, especially in the case of an austenitic stainless steel, if Al is added, rolling becomes difficult and descaling becomes practically impossible. Accordingly, it is practically impossible to prepare an Al-containing austenitic stainless steel foil having a thickness of scores of $\mu$m.

According to the peeling process, it is difficult to stably obtain a broad foil having a uniform thickness. If the thickness of the foil for a metal carrier is not uniform, the preparation of a corrugated foil for the formation of a honeycomb becomes difficult, and when flat and corrugated foils are alternatively disposed and wound, vacant spaces are formed between the flat and corrugated sheets and cause insufficient bonding of the foils which is not suitable for an automobile exhaust gas-purifying catalyst carrier.

As the means for overcoming the foregoing difficulties in the preparation of an Al-containing stainless steel foil for a metal carrier, there has been proposed a process in which a foil having a thickness of scores of $\mu$m is directly prepared from the melt by the rapid solidification method. The preparation of an Al-containing stainless steel foil for a metal carrier by the rapid solidification is disclosed in Japanese Unexamined Patent Publication No. 63-42347 and Japanese Unexamined Patent Publication No. 63-42356.

By applying a rapid solidification to the preparation of an Al-containing stainless steel foil for a metal carrier, it becomes possible to directly obtain an Al-containing stainless steel foil having a thickness of scores of $\mu$m, at a low cost, and the limitation of the Al content can be disregarded. Nevertheless, the foil obtained by the rapid solidification is still defective in that the precision of the thickness of the obtained foil is unsatisfactory and it is difficult to stably obtain a broad foil having a uniform thickness. As pointed out hereinbefore, a foil not having a uniform thickness is not preferred as a foil for a catalyst carrier, and preferably, the variation of the thickness in a foil for a metal carrier should be controlled to within ±20% in the thickness range of 30 to 70 $\mu$m.

As apparent from the foregoing description, to realize a good metal carrier for an automobile exhaust gas-purifying catalyst, the development of a process suitable for preparing an Al-containing stainless steel foil for a honeycomb having a uniform thickness, at a low cost, and a process for preparing an Al-containing steel foil having a uniform thickness even at an Al content higher than 5.5% by weight, is desired. Furthermore, the development of an Al-containing austenitic stainless steel foil for a honeycomb having a superior strength at high temperatures, as a material capable of being used as a metal carrier for an automobile exhaust gas-purifying catalyst, is also desired.

## SUMMARY OF THE INVENTION

In view of the foregoing, the inventors carried out intensive research, and as a result, completed the present invention.

Therefore, a primary object of the present invention is to provide an Al-containing stainless steel foil having a uniform thickness of scores of $\mu$m as a metal foil for an exhaust gas-purifying catalyst carrier.

Another object of the present invention is to provide a process for stably preparing an Al-containing steel foil as mentioned above at a lower cost, without a limitation of the aluminum content.

In accordance with the present invention, these objects can be attained by a stainless steel foil for an automobile exhaust gas-purifying catalyst, which is a cold-rolled, rapidly solidified steel foil comprising 1 to 20% by weight, preferably 5.5 to 20% by weight, of Al, if necessary, 12 to 45% by weight of Ni, 12 to 30% by weight of Cr, up to 2% by weight of Mn, up to 3% by weight of Si and up to 1% by weight of C, with the balance comprising Fe and unavoidable impurities, said foil further comprising one or both of (a) up to 2% by weight of at least one element selected from the group consisting of Y, Sc and REM and (b) up to 2% by weight of at least one element selected from the group consisting of Ti, Nb, Zr, Hf, V, Ta, Mo and W, wherein the thickness is 30 to 70 $\mu$m, and the variation of the thickness is within ±20%, preferably ±10%, of the average thickness.

Furthermore, in accordance with the present invention, there is provided a process for preparing a stainless steel foil as mentioned above, which comprises rapidly solidifying a melted steel having the above-mentioned chemical composition to form a thin strip having a thickness smaller than 0.2 mm, and cold-rolling the as-cast thin strip.

This process capable of providing a stainless steel foil for a catalyst carrier having a high dimensional precision is based on the following novel finding. Namely, it was found that even from an Al-containing stainless steel having an Al content of at least 5.5% by weight, especially an austenitic stainless steel having an Al content of at least 1% by weight, an as-cast thin strip can be directly cold-rolled if the casting is performed by the rapid solidification, whereby a foil having a uniform thickness of 30 to 70 $\mu$m can be obtained. Namely, the subject of stably preparing an Al-containing steel foil having a uniform thickness, at a low cost, and the subject of preparing a foil having a uniform thickness even from a high-Al containing steel having an Al content of at least 5.5% by weight and an austenitic stainless steel having an Al content of at least 1% by weight, can be simultaneously solved by the process of the present invention.

## DESCRIPTION OF THE PREFERRED EMBODIMENTS

The characteristic constructural requirements of the present invention will now be described.

The rapid solidification characterizing the preparation of a stainless steel foil of the present invention is a solidification process conducted at a higher cooling rate than that adopted for usual ingot casting and continuous casting processes for metals and alloys. For example, this rapid solidification can be realized by ejecting a melted metal or alloy onto a cooling roll rotated at a high speed, which formed of a metal having a high thermal conductivity such as copper. The shape of the product is limited, to enable the use of a high cooling rate, and the product is mainly a thin strip. According to this method, a cooling rate of, for example, about $10^5$ ° C/sec, can be attained, and an amorphous alloy can be obtained by appropriately selecting the alloy components. In this casting process, it is difficult to precisely measure the cooling rate, and further, although it is difficult to strictly distinguish the rapid solidification from the conventional solidification accordance with the cooling rate, in general, the rapid solidification appear to mean the case of which a cooling rate is at least about $10^2$ ° C/sec.

The Al-containing stainless steel is not rendered amorphous even at a cooling rate of about $10^5$ ° C/sec, although the chemical composition is described in detail hereinafter, and the thin strip obtained has a crystalline structure. Even if the steel is not rendered amorphous, the material obtained by the rapid solidification has several advantages over the material solidified at the conventional cooling rate. For example, since a foil having a thickness of scores of $\mu$m can be directly obtained from a melted steel, the foil can be prepared at a low cost, and this possibility is not limited by the Al content. These points are advantageous for the process for preparing a foil for a metal carrier for an exhaust gas-purifying catalyst.

The inventors noted this rapid solidification and carried out research with a view to improving the low thickness precision, which is the defect of the conventional process for preparing a foil by the rapid solidification, and carried out experiments on rolling the products obtained by the rapid solidification. As a result, it was found that a foil having a thickness of 30 to 70 $\mu$m can be formed by directly cold-rolling the as-cast sheet. From the conventional technical common-sense, it is surprising to find that this sheet formed by the rapid solidification can be easily cold-rolled without a dependency of the Al content, even if the Al content is increased.

Generally, the thickness precision is not substantially improved by the cold rolling in the sheet prepared by the conventional hot and cold rolling a continuous casting slab process, and it has been found that, in the sheet prepared by the rapid solidification, the thickness precision is improved only by the cold rolling and a foil having a uniform thickness can be obtained. As described in detail in the example given hereinafter, for example, when a sheet having a thickness of about 0.1 mm is prepared by rapid solidification, the variation of the thickness is generally ± about 20% or more of the average thickness, but according to the present invention, the variation of the thickness can be controlled to within ±20%, especially ±10%, by the cold rolling to a thickness of 30 to 70 $\mu$m.

Furthermore, even if the above-mentioned cold rolling is added, the advantage of the rapid solidification, i.e., the low production cost, is not lost.

Even in a sheet obtained by the rapid solidification, there is a limitation to the thickness for the cold rolling. When the cold rolling of sheets having different thicknesses was attempted, it was found that, if the thickness is larger than 0.2 mm, the cold rolling becomes difficult, and in this case, unless the cold rolling is combined with hot rolling or the microstructure is controlled by a heat treatment so that the cold rolling becomes possible, a foil having a thickness of scores of $\mu$m cannot be obtained. The addition of the hot rolling or heat treatment is considered to increase the cost as in the conventional process and the advantage of the rapid solidification is lost. Accordingly, the thickness of the sheet obtained by the rapid solidification is limited in the present invention.

In principle, the rapid solidification of the present invention is accomplished by the liquid-quenching method comprising ejecting a melted alloy onto a moving cooling substrate, through a nozzle, and rapid solidifying the melt by thermal contact. This liquid-quenching method includes a one surface-cooling method using a single roll, a centrifugal quenching method using the inner wall of a drum, a method using an endless belt, improved methods thereof such as a method using an apparatus provided with an auxiliary roll or a roll surface temperature-controlling device, and a method in which the casting is carried out under a reduced pressure, in vacuum or in an inert gas. Furthermore, a both-surface cooling method, for example, a double-roll method or double-belt method in which a melted alloy is cast between a pair of rolls or belts and rapidly solidified, is included. Preferred conditions for preparing the sheet by the rapid solidification will be described in the example given hereinafter, but in any method, the thickness of the sheet is mainly controlled by controlling the moving speed of the cooling substrate, and the thickness of the sheet is adjusted below 0.2 mm. Preferably, the thickness of the sheet obtained by the rapid solidification is as uniform as possible, and the variation of the sheet thickness is within ± about 30% of the average thickness of the sheet.

In principle, a rolling mill comprising a pair of rolls is used as the rolling mill in the present invention, but a multi-staged rolling mill having at least two stages and comprising back-up rollers, a continuous rolling mill comprising the foregoing rolling mills in combination, a Sendzimir multi-staged mill, and a rolling mill having rolls with different diameters also can be used. Furthermore, an in-line method in which the rapid solidification and the cold rolling are carried out in succession can be adopted.

Since in the present invention it is intended to obtain a uniform thickness, the reduction ratio as the cold rolling condition need not be greatly increased. In the process of the present invention, a reduction ratio of at least about 50% at one rolling pass can be adopted, but there is a risk of an occurrence of cracking at too high a reduction ratio, and therefore, the reduction ratio at one rolling pass is lower than 50%, preferably lower than 30%. In view of the productivity, preferably the rolling frequency is as low as possible. The rolling speed (the rotation number of the rolls) is not particularly critical, but preferably the rolling speed is lower than 5 m/sec. Moreover, a tension rolling effectively improves the linearity of the obtained foil. In the present invention, the sheet is finally formed into a foil having a thickness of 30 to 70 $\mu$m. The thickness is thus limited because the thickness suitable for the foil for a metal carrier is 30 to 70 $\mu$m.

In the present invention, the variation of the thickness of the foil for a metal carrier is controlled within the range of ±20% of the average thickness of the foil. It was found that, within this range, a good workability is obtained when the foil is formed into a honeycomb and spaces are not formed in contact points between the flat and corrugated foils. A small variation of the thickness is preferred for the foil for a metal carrier. According to the process of the present invention, a foil having a thickness variation within the range of ±10%, especially ±5%, of the average thickness can be practically prepared. In the preparation of a sheet by the rapid solidification, the formation of an Al-containing stainless steel having a thickness of 30 to 70 $\mu$m within the thickness variation of ±20% of the average thickness is not impossible if various preparation parameters are strictly controlled, but it is very difficult to stably obtain such a foil on an industrial scale.

The components of the Al-containing stainless steel prepared according to the process of the present invention will now be described.

In the present invention, the Al content is not particularly critical, and a foil having a uniform thickness can be easily prepared according to the process of the present invention, regardless of the Al content. Nevertheless, the Al content is limited to 1 to 20% by weight in the present invention. This is because the Al content of at least 1% by weight is necessary for obtaining the oxidation resistance required for the foil for a metal carrier, and if the Al content exceeds 20% by weight, the melting point is lowered to a level close to the using temperature. In the process of the present invention, an Al-containing stainless steel having a uniform thickness of scores of $\mu$m can be prepared at a lower cost than in the conventional process, where a foil is prepared from an ingot by hot and cold rolling. According to the conventional process, it is difficult to prepare a foil if the Al content exceeds 5.5% by weight. In contrast, according to the present invention, even if the Al content is higher than 5.5% by weight, an Al-containing stainless steel foil having a uniform thickness of scores of $\mu$m can be prepared.

Regarding the Cr content, to smoothly perform a selective oxidation of Al in the foil for a metal carrier, and maintain a good corrosion resistance at a normal temperature, preferably the Cr is contained in an amount of at least 5% by weight. In the process of the present invention, the Cr content is not particularly critical, but if the Cr content is too high, the foil for a metal carrier becomes brittle. Accordingly, preferably the Cr content is up to 30% by weight.

Furthermore, up to 1% by weight of C is incorporated to impart a strength at high temperatures, up to 2% by weight of Mn is incorporated to maintain a good balance in the preparation steps, and up to 3% by weight of Si is incorporated to improve the oxidation resistance and the adhesion to $Al_2O_3$.

When Ni is incorporated for forming an austenitic stainless steel and obtaining a foil having a good strength at high temperatures, the content of Ni is limited to 12 to 45% by weight.

Ni and Cr are elements determining the austenizing degree, and to provide an austenitic stainless steel, preferably the Ni and Cr are appropriately combined and incorporated.

To further improve the oxidation resistance and the adhesion to $Al_2O_3$ , one or both of (a) up to 0.3% by weight of at least one element selected from the group consisting of Y, Sc and REM and (b) up to 2% by weight of at least one element selected from the group consisting of Ti, Nb, Zr, Hf, V, Ta, Mo and W can be incorporated.

The term REM used herein is a generic term representing rare earth metals such as Ce, La, Pan Nd, Pm and Sm, and the content of REM is the sum of the contents of these rare earth elements. To further improve the oxidation resistance and the adhesion to $Al_2O_3$ , preferably each of the elements (a) and (b) is incorporated in an amount of at least 0.01% by weight.

Note, the balance comprises Fe and unavoidable impurities.

The Al-containing stainless steel foil provided according to the present invention is very useful, in view of the high oxidation resistance and superior high-temperature strength required for a metal carrier for an automobile exhaust gas-purifying catalyst, and in view of the high thickness precision, and a carrier composed of the stainless steel foil of the present invention is especially valuable as an automobile exhaust gas-purifying catalyst carrier.

According to the preparation process of the present invention, a foil having a uniform thickness of 30 to 70 $\mu$m with a thickness variation controlled within ±20%, especially, ±10%, can be prepared stably at a low cost, regardless of the Al content. The process of the present invention is especially advantageous for the production of an Al-containing stainless steel foil for a carrier for an automobile exhaust gas-purifying catalyst.

Example

Various Al-containing stainless steels having different chemical compositions were prepared by the vacuum melting method and used as samples for the production of rapidly solidified sheets. Each sample was re-melted in a high-frequency induction melting furnace, and the melt was ejected onto a cooling roll rotated at a high speed in an inert gas atmosphere, and rapidly solidified on the roll to prepare a sheet (the single-roll method). Data of the composition and the like of the obtained sheets is shown in runs 1 through 22 and 28 through 41 of Table 1. In each composition shown in Table 1, the balance was Fe. In this test, the sample-ejecting temperature was 1600°C, the gas pressure for spouting the melt was 0.3 kg/cm$^2$, a cooling roll having a diameter of 300 mm was used, and the cooling roll surface speed was adjusted to 10 to 15 mm/sec. In runs 23 through 27 and 42 through 44, samples were prepared by the double-roll method. In this case, the cooling roll diameter was 300 mm and the cooling roll surface speed was adjusted to 5 to 8 m/sec.

With respect to each of samples of runs 1 through 44 prepared according to the rapid solidification, the thickness was measured by using a micrometer, and the average thickness and variations of the thickness were determined. The measurement was conducted at intervals of 1 m in the length direction, and at each of these points, the thickness was measured at five points at equal intervals in the width direction. At each of the points at intervals in the longitudinal direction, the average thickness was calculated, and the entire average thickness was calculated from these average thicknesses determined along the entire length of the sample. The thickness variation was determined by using the maximum value of the deviation from the entire average thickness among all of the average thicknesses determined at intervals of 1 m in the longitudinal direction. The values of the average thickness and the thickness variation, obtained in the respective runs, are shown in the column "Shape of Foil after Rapid Solidification" of Table 1. In the same manner as adopted for the measurement of the thickness, the width was measured at intervals of 1 m in the longitudinal direction of the sample, and the average width was calculated from these measured values. The average width of each sample is shown in the column "Shape of Foil after Rapid Solidification" in Table 1.

All of these samples were cold-rolled, and all of the samples could be cold-rolled to the aimed thickness. In runs 2, 6, 32 and 36, the aimed thickness was 30 $\mu$m, in runs 3 and 33, the aimed thickness was 70 $\mu$m, and in other runs, the aimed thickness was 50 $\mu$m. The cold rolling was carried out under the conditions of a work roll diameter of 60 mm, a maximum roll pressure of 80 tons, and a roll rotation speed of 10 m/min, and the cold rolling was conducted 2 to 5 times. The cold rolling was carried out while applying tensions of the sample from in front of and behind the sample, and these tensions were 30 to 100 kgf and 40 to 150 kgf, respectively.

With respect to each of the samples after the cold rolling, the thickness, the thickness variation, and the width were determined, and the obtained values are shown in the column "Shape of Foil after Cold Rolling" in Table 1. The thickness, the thickness variation, and the width were determined in the same manner as described above with respect to the samples after the rapid solidification. From the values of the thickness variation, it is seen that the thickness precision is considerably improved by the cold rolling.

A carrier was prepared by using the foils of 35 runs after the cold rolling. Namely, the corrugated foil and the as-prepared flat foil were alternatively disposed, wound in the form of a cylindrical honeycomb having a diameter of 100 mm, and soldered to fix the foils to each other. The length of the carrier corresponded to the width of the foil.

To evaluate the oxidation resistance, the foils after the cold rolling and the carriers, obtained in the runs other than runs 2, 3, 6, 10, 11, 22, 32, 33 and 36, were maintained in air at 1150°C for 150 hours, and the occurrence of abnormal oxidation was checked. The results are shown in Table 1. No abnormal oxidation was found in any of the tested foils and carriers.

To examine the bonding state (soldering state) of the obtained carrier, the ratio of the number of the points of good bonding to the total number of the points of the contact between the flat foil and corrugated foil on one side end face of the carrier was determined by using an optical microscope. The obtained ratio is shown as the bonding ratio in Table 1. In each case, a high bonding ratio exceeding 70% was obtained.

Then, a slurry formed by suspending platinum chloride and $\gamma$-$Al_2O_3$ powder was applied to honeycombs composed of the foils of runs 1, 7, 14, 16, 26, 34, 37, 39, and 41, and the honeycombs were dried and then fired. Each of the obtained catalyst-supporting carriers was connected to the exhaust system of a gasoline engine. The cycle of 30 minutes' driving and 30 minutes' stopping was repeated 10 times, and the state of the carrier was examined. During the driving of the engine, the exhaust gas temperature in the vicinity of the honeycomb was 880 to 920°C in the case of the carriers of runs 1, 7, 14, 16 and 26 and 900 to 950°C in the case of the carriers of runs 34, 31, 39 and 41. In the tested carriers, falling off of the $\gamma$-$Al_2O_3$ powder did not occur, and no other problems arose during this use.

Comparative Example

The direct preparation of the carrier foil by rapid solidification was tried in runs 45 through 56 as a comparison with the process of the present invention. These foils were prepared by the single-roll method, with the aimed thickness being set at 50 $\mu$m. The same single-roll apparatus as adopted in the example was used as the preparation apparatus, the roll surface speed was adjusted to 18 to 20 m/sec., and the other preparation conditions were the same as those adopted in the example.

The thickness, the thickness variation, and the width were determined in the same manner as adopted in the example, and the results are shown in Table 1. In all of the foils obtained directly by rapid solidification, with the aimed thickness being set at 50 $\mu$m, the thickness variation was large. Carriers were prepared by using these foils in the same manner as adopted in the example, and the bonding ratio was determined. Furthermore, the oxidation resistance was evaluated in the same manner as described in the example. It was found that the oxidation resistance was high but the bonding ratio was low. It is considered that the bonding ratio was low because the thickness variation of the foil was large, and thus spaces were formed between the flat and corrugated foils and a good soldering state was not attained.

Table 1-(1)

| Run No. | | Chemical Composition (% by weight) | | | | | | | | | | | | | | | | |
|---|---|---|---|---|---|---|---|---|---|---|---|---|---|---|---|---|---|---|
| | | Al | Ni | Cr | C | Si | Mn | Y | Sc | REM | Ti | Nb | Zr | Hf | V | Ta | Mo | W |
| Present invention | 1 | 8.6 | - | 20.2 | 0.02 | 0.21 | 0.30 | - | - | 0.08 | 0.25 | - | - | - | - | - | - | - |
| | 2 | 8.6 | - | 20.2 | 0.02 | 0.21 | 0.30 | - | - | 0.08 | 0.25 | - | - | - | - | - | - | - |
| | 3 | 8.6 | - | 20.2 | 0.02 | 0.21 | 0.30 | - | - | 0.08 | 0.25 | - | - | - | - | - | - | - |
| | 4 | 8.6 | - | 20.2 | 0.02 | 0.21 | 0.30 | - | - | 0.08 | 0.25 | - | - | - | - | - | - | - |
| | 5 | 10.1 | - | 15.1 | 0.02 | 0.21 | 0.30 | 0.06 | - | - | - | - | 0.50 | - | - | - | - | - |
| | 6 | 10.1 | - | 15.1 | 0.02 | 0.21 | 0.30 | 0.06 | - | - | - | - | 0.50 | - | - | - | - | - |
| | 7 | 10.1 | - | 15.1 | 0.02 | 0.21 | 0.30 | 0.06 | - | - | - | - | 0.50 | - | - | - | - | - |
| | 8 | 5.1 | - | 20.3 | 0.01 | 0.20 | 0.31 | 0.05 | - | 0.12 | 0.30 | - | - | 0.19 | - | - | - | - |
| | 9 | 5.1 | - | 20.3 | 0.01 | 0.20 | 0.31 | 0.05 | - | 0.12 | 0.30 | - | - | 0.19 | - | - | - | - |
| | 10 | 3.8 | - | 25.4 | 0.04 | 0.60 | 0.31 | 0.05 | - | 0.04 | - | 0.32 | 0.30 | - | - | - | - | - |
| | 11 | 2.2 | - | 28.9 | 0.04 | 0.81 | 0.30 | - | - | 0.06 | 0.52 | - | - | - | - | - | - | - |
| | 12 | 5.9 | - | 19.8 | 0.01 | 0.20 | 0.30 | - | - | 0.10 | 0.50 | - | - | - | 0.31 | 0.20 | - | - |
| | 13 | 12.4 | - | 11.4 | 0.01 | 0.21 | 0.30 | - | - | - | - | - | - | - | - | - | - | - |
| | 14 | 12.4 | - | 11.4 | 0.01 | 0.21 | 0.30 | - | - | - | - | - | - | - | - | - | - | - |
| | 15 | 12.1 | - | 11.4 | 0.01 | 0.21 | 0.30 | - | - | 0.06 | - | 0.30 | - | 0.19 | - | - | - | - |
| | 16 | 11.9 | - | 15.1 | 0.01 | 0.21 | 0.30 | - | 0.05 | - | - | - | - | - | - | - | 0.21 | 0.22 |
| | 17 | 12.0 | - | 15.3 | 0.01 | 0.21 | 0.30 | - | 0.04 | 0.05 | 0.28 | - | - | - | - | - | 0.25 | - |
| | 18 | 15.2 | - | 10.1 | 0.01 | 0.21 | 0.30 | - | - | - | 0.81 | - | - | - | - | - | - | - |
| | 19 | 15.1 | - | 5.2 | 0.02 | 0.21 | 0.30 | - | - | - | 0.31 | - | - | - | - | - | - | - |
| | 20 | 7.8 | - | 15.2 | 0.01 | 0.20 | 0.31 | 0.04 | - | 0.06 | - | - | 0.30 | 0.21 | - | - | - | - |
| | 21 | 5.2 | - | 20.1 | 0.02 | 0.20 | 0.88 | 0.05 | - | 0.04 | 0.30 | 0.20 | - | - | - | - | 0.18 | - |
| | 22 | 18.2 | - | 5.3 | 0.02 | 0.20 | 0.30 | - | - | - | 0.30 | - | - | - | - | - | - | - |
| | 23 | 5.1 | - | 20.3 | 0.01 | 0.20 | 0.31 | 0.05 | - | 0.12 | 0.30 | - | - | 0.19 | - | - | - | - |
| | 24 | 5.1 | - | 20.3 | 0.01 | 0.20 | 0.31 | 0.05 | - | 0.12 | 0.30 | - | - | 0.19 | - | - | - | - |
| | 25 | 8.6 | - | 20.2 | 0.02 | 0.21 | 0.30 | - | - | 0.08 | 0.25 | - | - | - | - | - | - | - |
| | 26 | 12.0 | - | 15.3 | 0.01 | 0.21 | 0.30 | - | 0.04 | 0.05 | 0.28 | - | - | - | - | - | 0.25 | - |
| | 27 | 12.0 | - | 15.3 | 0.01 | 0.21 | 0.30 | - | 0.04 | 0.05 | 0.28 | - | - | - | - | - | 0.25 | - |

Table 1-(2)

| No. | | Chemical Composition (% by weight) | | | | | | | | | | | | | | | | |
|---|---|---|---|---|---|---|---|---|---|---|---|---|---|---|---|---|---|---|
| | | Al | Ni | Cr | C | Si | Mn | Y | Sc | REM | Ti | Nb | Zr | Hf | V | Ta | Mo | W |
| Present invention | 28 | 2.4 | 25.1 | 16.8 | 0.02 | 0.20 | 0.31 | - | - | 0.08 | 0.20 | 0.10 | - | - | - | - | - | - |
| | 29 | 3.6 | 25.4 | 16.6 | 0.02 | 0.81 | 0.30 | - | - | 0.13 | - | - | - | - | - | - | - | - |
| | 30 | 4.2 | 24.8 | 17.1 | 0.01 | 0.21 | 0.28 | 0.05 | 0.02 | - | - | 0.20 | 0.11 | - | - | - | 0.31 | 0.50 |
| | 31 | 4.6 | 18.6 | 16.2 | 0.05 | 0.20 | 0.29 | - | - | 0.10 | 0.21 | - | - | - | 0.20 | 0.50 | - | - |
| | 32 | 5.2 | 25.6 | 16.7 | 0.02 | 0.20 | 0.29 | - | - | 0.08 | 0.24 | 0.30 | - | - | - | - | - | - |
| | 33 | 5.2 | 25.6 | 16.7 | 0.02 | 0.20 | 0.29 | - | - | 0.08 | 0.24 | 0.30 | - | - | - | - | - | - |
| | 34 | 5.2 | 25.6 | 16.7 | 0.02 | 0.20 | 0.29 | - | - | 0.08 | 0.24 | 0.30 | - | - | - | - | - | - |
| | 35 | 5.2 | 25.6 | 16.7 | 0.02 | 0.20 | 0.29 | - | - | 0.08 | 0.24 | 0.30 | - | - | - | - | - | - |
| | 36 | 8.1 | 25.2 | 16.6 | 0.02 | 0.20 | 0.30 | 0.06 | - | - | - | - | 0.31 | - | 0.29 | - | 0.50 | - |
| | 37 | 8.1 | 25.2 | 16.6 | 0.02 | 0.20 | 0.30 | 0.06 | - | - | - | - | 0.31 | - | 0.29 | - | 0.50 | - |
| | 38 | 8.3 | 34.1 | 12.8 | 0.01 | 0.19 | 0.29 | 0.04 | - | 0.05 | - | - | - | 0.28 | - | 0.51 | 0.28 | - |
| | 39 | 5.6 | 12.8 | 18.1 | 0.06 | 0.20 | 0.29 | - | - | 0.09 | - | - | - | - | - | - | 1.80 | - |
| | 40 | 12.8 | 25.1 | 16.6 | 0.02 | 0.61 | 0.31 | 0.03 | 0.01 | 0.06 | - | - | 0.30 | - | - | 0.50 | - | - |
| | 41 | 5.1 | 38.5 | 23.4 | 0.02 | 0.21 | 0.81 | - | 0.03 | 0.06 | - | 0.29 | - | 0.30 | 0.22 | - | - | - |
| | 42 | 5.2 | 25.6 | 16.7 | 0.02 | 0.20 | 0.29 | - | - | 0.08 | 0.24 | 0.30 | - | - | - | - | - | - |
| | 43 | 5.2 | 25.6 | 16.7 | 0.02 | 0.20 | 0.29 | - | - | 0.08 | 0.24 | 0.30 | - | - | - | - | - | - |
| | 44 | 8.3 | 34.1 | 12.8 | 0.01 | 0.19 | 0.29 | - | - | - | - | - | - | 0.28 | - | 0.51 | 0.28 | - |
| Comparison | 45 | 8.6 | - | 20.2 | 0.02 | 0.21 | 0.30 | - | - | 0.08 | 0.25 | - | - | - | - | - | - | - |
| | 46 | 8.6 | - | 20.2 | 0.02 | 0.21 | 0.30 | - | - | 0.08 | 0.25 | - | - | - | - | - | - | - |
| | 47 | 5.2 | - | 20.1 | 0.02 | 0.20 | 0.88 | 0.05 | - | 0.04 | 0.30 | 0.20 | - | - | - | - | 0.18 | - |
| | 48 | 11.9 | - | 15.1 | 0.01 | 0.21 | 0.30 | - | 0.05 | - | - | - | - | - | - | - | 0.21 | 0.22 |
| | 49 | 11.9 | - | 15.1 | 0.01 | 0.21 | 0.30 | - | 0.05 | - | - | - | - | - | - | - | 0.21 | 0.22 |
| | 50 | 12.1 | - | 11.4 | 0.01 | 0.21 | 0.30 | - | - | 0.06 | - | 0.30 | - | 0.19 | - | - | - | - |
| | 51 | 15.1 | - | 5.2 | 0.02 | 0.21 | 0.30 | - | - | - | 0.31 | - | - | - | - | - | - | - |
| | 52 | 5.2 | 25.6 | 16.7 | 0.02 | 0.20 | 0.29 | - | - | 0.08 | 0.24 | 0.30 | - | - | - | - | - | - |
| | 53 | 5.2 | 25.6 | 16.7 | 0.02 | 0.20 | 0.29 | - | - | 0.08 | 0.24 | 0.30 | - | - | - | - | - | - |
| | 54 | 4.6 | 18.6 | 16.2 | 0.05 | 0.20 | 0.29 | - | - | 0.10 | 0.21 | - | - | - | 0.20 | 0.50 | - | - |
| | 55 | 5.6 | 12.8 | 18.1 | 0.06 | 0.20 | 0.29 | - | - | 0.09 | - | - | - | - | - | - | 1.80 | - |
| | 56 | 8.1 | 25.2 | 16.6 | 0.02 | 0.20 | 0.30 | 0.06 | - | - | - | - | 0.31 | - | 0.29 | - | 0.50 | - |

EP 0 497 992 A1

Table 1-(3)

| | Run No. | Shape of Sheet after Rapid Solidification | | | Shape of Foil after Cold Rolling | | | Occurrence of Abnormal Oxidation | | Bonding ratio (%) |
|---|---|---|---|---|---|---|---|---|---|---|
| | | width (mm) | thickness (μm) | thickness variation (%) | width (mm) | thickness (μm) | thickness variation (%) | foil | carrier | |
| Present invention | 1 | 50 | 87.7 | ±20.2 | 50.5 | 50.2 | ±3.8 | not observed | not observed | 78 |
| | 2 | 50 | 102.2 | ±18.6 | 50.5 | 30.1 | ±2.9 | - | - | - |
| | 3 | 50 | 131.4 | ±20.8 | 50.5 | 70.1 | ±3.5 | - | - | - |
| | 4 | 24.5 | 98.2 | ±23.0 | 25 | 50.3 | ±4.1 | not observed | not observed | 86 |
| | 5 | 50 | 112.2 | ±23.4 | 50.5 | 50.1 | ±3.8 | not observed | not observed | 82 |
| | 6 | 50 | 92.1 | ±16.4 | 50.5 | 30.2 | ±2.2 | - | - | - |
| | 7 | 150 | 91.8 | ±19.2 | 151 | 50.2 | ±5.1 | not observed | not observed | 74 |
| | 8 | 50 | 89.2 | ±24.8 | 50.5 | 50.3 | ±6.2 | not observed | not observed | 75 |
| | 9 | 75 | 121.2 | ±20.9 | 76 | 50.2 | ±3.1 | not observed | not observed | 71 |
| | 10 | 50 | 140.1 | ±18.9 | 51 | 49.8 | ±2.4 | - | - | - |
| | 11 | 50 | 112.4 | ±22.1 | 50.5 | 50.1 | ±3.0 | - | - | - |

Table 1-(3) (Continued)

| | Run No. | Shape of Sheet after Rapid Solidification | | | Shape of Foil after Cold Rolling | | | Occurrence of Abnormal Oxidation | | Bonding ratio (%) |
|---|---|---|---|---|---|---|---|---|---|---|
| | | width (mm) | thick-ness ($\mu$m) | thickness variation (%) | width (mm) | thick-ness ($\mu$m) | thickness variation (%) | foil | carrier | |
| Present invention | 12 | 50 | 92.3 | $\pm 22.2$ | 50.5 | 49.9 | $\pm 1.9$ | not ob-served | not ob-served | 77 |
| | 13 | 50 | 94.6 | $\pm 22.6$ | 50.5 | 50.1 | $\pm 2.3$ | not ob-served | not ob-served | 81 |
| | 14 | 120 | 102.1 | $\pm 22.8$ | 121 | 50.2 | $\pm 6.2$ | not ob-served | not ob-served | 68 |
| | 15 | 50 | 132.1 | $\pm 28.2$ | 50.5 | 50.1 | $\pm 4.2$ | not ob-served | not ob-served | 81 |
| | 16 | 50 | 99.6 | $\pm 18.9$ | 50.5 | 50.2 | $\pm 2.3$ | not ob-served | not ob-served | 79 |
| | 17 | 50 | 97.2 | $\pm 22.8$ | 50.5 | 50.2 | $\pm 2.1$ | not ob-served | not ob-served | 80 |
| | 18 | 50 | 88.6 | $\pm 15.8$ | 50.5 | 50.1 | $\pm 2.9$ | not ob-served | not ob-served | 75 |
| | 19 | 50 | 91.6 | $\pm 21.2$ | 50.5 | 49.8 | $\pm 3.3$ | not ob-served | not ob-served | 72 |
| | 20 | 50 | 118.4 | $\pm 20.8$ | 50.5 | 50.3 | $\pm 4.0$ | not ob-served | not ob-served | 74 |

EP 0 497 992 A1

Table 1-(3) (Continued)

EP 0 497 992 A1

| | Run No. | Shape of Sheet after Rapid Solidification | | | Shape of Foil after Cold Rolling | | | Occurrence of Abnormal Oxidation | | Bonding ratio (%) |
|---|---|---|---|---|---|---|---|---|---|---|
| | | width (mm) | thick-ness (μm) | thickness variation (%) | width (mm) | thick-ness (μm) | thickness variation (%) | foil | carrier | |
| Present invention | 21 | 75 | 98.2 | ±22.6 | 76 | 50.1 | ±5.0 | not ob-served | not ob-served | 71 |
| | 22 | 50 | 98.4 | ±22.4 | 50.5 | 50.6 | ±4.6 | - | - | - |
| | 23 | 25 | 183.2 | ±13.4 | 26 | 50.7 | ±3.4 | not ob-served | not ob-served | 83 |
| | 24 | 100 | 190.5 | ±18.6 | 101 | 50.4 | ±4.6 | not ob-served | not ob-served | 71 |
| | 25 | 25 | 178.4 | ±16.4 | 26 | 50.2 | ±4.1 | not ob-served | not ob-served | 70 |
| | 26 | 50 | 176.2 | ±18.0 | 51 | 50.3 | ±6.0 | not ob-served | not ob-served | 69 |
| | 27 | 50 | 180.2 | ±19.3 | 51 | 50.4 | ±5.2 | not ob-served | not ob-served | 74 |

Table 1-(4)

| Run No. | | Shape of Sheet after Rapid Solidification | | | Shape of Foil after Cold Rolling | | | Occurrence of Abnormal Oxidation | | Bonding ratio (%) |
|---|---|---|---|---|---|---|---|---|---|---|
| | | width (mm) | thickness (μm) | thickness variation (%) | width (mm) | thickness (μm) | thickness variation (%) | foil | carrier | |
| Present invention | 28 | 50 | 76.5 | ±23.2 | 50.5 | 50.1 | ±4.2 | not observed | not observed | 81 |
| | 29 | 50 | 81.2 | ±25.6 | 50.5 | 49.9 | ±3.2 | not observed | not observed | 79 |
| | 30 | 50 | 112.1 | ±26.4 | 50.5 | 50.2 | ±3.8 | not observed | not observed | 86 |
| | 31 | 75 | 104.4 | ±28.1 | 76 | 50.1 | ±2.8 | not observed | not observed | 82 |
| | 32 | 50 | 86.5 | ±22.3 | 50.5 | 30.2 | ±1.9 | - | - | - |
| | 33 | 50 | 91.4 | ±28.4 | 50.5 | 70.0 | ±3.1 | - | - | - |
| | 34 | 100 | 124.1 | ±24.5 | 101 | 50.0 | ±3.9 | not observed | not observed | 78 |
| | 35 | 120 | 102.4 | ±29.3 | 121 | 50.3 | ±5.8 | not observed | not observed | 72 |
| | 36 | 50 | 91.3 | ±21.4 | 50.5 | 30.1 | ±2.1 | - | - | - |
| | 37 | 100 | 84.2 | ±23.5 | 101 | 50.1 | ±2.9 | not observed | not observed | 82 |

EP 0 497 992 A1

Table 1-(4) (Continued)

| | Run No. | Shape of Sheet (Foil) after Rapid Solidification | | | Shape of Foil after Cold Rolling | | | Occurrence of Abnormal Oxidation | | Bonding ratio (%) |
|---|---|---|---|---|---|---|---|---|---|---|
| | | width (mm) | thick- ness (μm) | thickness variation (%) | width (mm) | thick- ness (μm) | thickness variation (%) | foil | carrier | |
| Present invention | 38 | 50 | 76.4 | ±20.3 | 50.5 | 50.0 | ±5.9 | not ob- served | not ob- served | 74 |
| | 39 | 50 | 98.4 | ±24.2 | 50.5 | 50.2 | ±6.2 | not ob- served | not ob- served | 76 |
| | 40 | 50 | 108.7 | ±23.1 | 50.5 | 50.3 | ±4.8 | not ob- served | not ob- served | 75 |
| | 41 | 75 | 116.2 | ±25.2 | 76 | 50.3 | ±6.8 | not ob- served | not ob- served | 70 |
| | 42 | 25 | 188.4 | ±23.2 | 26 | 50.2 | ±4.8 | not ob- served | not ob- served | 78 |
| | 43 | 50 | 190.4 | ±26.4 | 51 | 50.3 | ±5.2 | not ob- served | not ob- served | 73 |
| | 44 | 50 | 171.5 | ±25.5 | 51 | 50.2 | ±4.1 | not ob- served | not ob- served | 80 |
| Comparison | 45 | 50 | 54.4 | ±22.8 | - | - | - | not ob- served | not ob- served | 45 |
| | 46 | 100 | 56.2 | ±16.3 | - | - | - | not ob- served | not ob- served | 48 |

Table 1-(4) (Continued)

| Run No. | Shape of Foil after Rapid Solidification | | | Shape of Foil after Cold Rolling | | | Occurrence of Abnormal Oxidation | | Bonding ratio (%) |
|---|---|---|---|---|---|---|---|---|---|
| | width (mm) | thickness (μm) | thickness variation (%) | width (mm) | thickness (μm) | thickness variation (%) | foil | carrier | |
| Comparison 47 | 75 | 52.8 | ±23.8 | - | - | - | not observed | not observed | 40 |
| 48 | 50 | 51.6 | ±21.8 | - | - | - | not observed | not observed | 50 |
| 49 | 150 | 53.9 | ±22.4 | - | - | - | not observed | not observed | 39 |
| 50 | 50 | 52.3 | ±19.8 | - | - | - | not observed | not observed | 42 |
| 51 | 50 | 48.2 | ±18.4 | - | - | - | not observed | not observed | 40 |
| 52 | 50 | 53.8 | ±21.4 | - | - | - | not observed | not observed | 42 |
| 53 | 75 | 51.4 | ±22.1 | - | - | - | not observed | not observed | 38 |
| 54 | 100 | 54.1 | ±24.8 | - | - | - | not observed | not observed | 48 |
| 55 | 50 | 48.6 | ±23.6 | - | - | - | not observed | not observed | 31 |
| 56 | 50 | 53.4 | ±26.7 | - | - | - | not observed | not observed | 39 |

## Claims

1. A stainless steel foil for an automobile exhaust gas-purifying catalyst carrier, which is a cold-rolled, rapidly solidified foil comprising 1.0 to 20% by weight of Al, 5 to 30% by weight of Cr, up to 2% by weight of Mn, up to 3% weight of Si and up to 1% by weight of C, with the balance comprising Fe and unavoidable impurities, wherein the thickness is 30 to 70 $\mu$m and the variation of the thickness is within ±20% of the

15

average thickness.

2. A stainless steel foil as set forth in claim 1, wherein the Al content is 5.5 to 20% by weight.

3. An austenitic stainless steel foil for an automobile exhaust gas-purifying catalyst carrier, which is a cold-rolled, rapidly solidified foil comprising 1.0 to 20% by weight of Al, 12 to 45% by weight of Ni, 12 to 30% by weight of Cr, up to 2% by weight of Mn, up to 3% by weight of Si and up to 1% by weight of C, with the balance comprising Fe and unavoidable impurities, wherein the thickness is 30 to 70 $\mu$m and the variation of the thickness is within ±20% of the average thickness.

4. A stainless steel foil as set forth in any of claims 1 through 3, wherein the foil further comprises on or both of (a) up to 0.3% by weight of at least one element selected from the group consisting of Y, Sc and REM and (b) up to 2% by weight of at least one element selected from the group consisting of Ti, Nb, Zr, Hf, V, Ta, Mo and W.

5. A stainless steel foil as set forth in claim 1 or 2, wherein the foil further comprises one or both of (a) up to 0.3% by weight of at least one element selected from the group consisting of Y, Sc and REM and (b) up to 2% by weight of at least one element selected from the group consisting of Ti, Nb, Zr and Hf.

6. A process for the preparation of a stainless steel foil for an automobile exhaust gas-purifying catalyst carrier, which comprises rapid solidifying a melt of an Al-containing stainless steel to form a sheet having a thickness smaller than 0.2 mm, and cold-rolling the as-cast sheet.

7. A process according to claim 6, wherein the melt of the Al-containing stainless steel is spouted onto a moving cooling substrate and rapidly solidified by a one-surface or both-surface cooling method.

8. A process according to claim 6 or 7, wherein the Al-containing stainless steel is an alloy comprising 1.0 to 20% by weight of Al, 5 to 30% by weight of Cr, up to 2% by weight of Mn, up to 3% weight of Si and up to 1% by weight of C, with the balance comprising Fe and unavoidable impurities.

9. A process according to claim 6 or 7, wherein the Al-containing stainless steel is an alloy comprising 1.0 to 20% by weight of Al, 12 to 45% by weight of Ni, 12 to 30% by weight of Cr, up to 2% by weight of Mn, up to 3% weight of Si and up to 1% by weight of C, with the balance comprising Fe and unavoidable impurities.

10. A process according to claim 8 or 9, wherein the alloy further comprises one or both of (a) up to 0.3% by weight of at least one element selected from the group consisting of Y, Sc and REM and (b) up to 2% by weight of at least one element selected from the group consisting of Ti, Nb, Zr, Hf, V, Ta, Mo and W.

11. A process according to claim 8 or 9, wherein the alloy further comprises one or both of (a) up to 0.3% by weight of at least one element selected from the group consisting of Y, Sc and REM and (b) up to 2% by weight of at least one element selected from the group consisting of Ti, Nb, Zr and Hf.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 621 569  (VACUUMSCHMELZE GmbH)<br>* Claims; page 3, lines 7-32 *<br>--- | 1,2,4,6<br>-8,10 | C 22 C   38/18<br>B 01 J   23/86 |
| A | METALLURGICAL TRANSACTIONS A, vol. 13 A, March 1982, pages 337-343; T. NAOHARA et al.: "Microstructures, mechanical properties, and electrical resistivity of rapidly quenched Fe-Cr-Al alloys"<br>* Page 337: "Experimental Procedures"; page 340, table I; page 342, summary *<br>--- | 1,2 | |
| A | EP-A-0 035 369  (FIRTH BROWN LTD)<br>* Claims 1-5; page 8, lines 5-11 *<br>----- | 1,2 | |

|  |  |
|---|---|
|  | TECHNICAL FIELDS SEARCHED (Int. Cl.5) |
|  | C 22 C   38/18 |

~~The present search report has been drawn up for all claims~~

| Place of search | Date of completion of the search | Examiner |
|---|---|---|
| THE HAGUE | 16-08-1990 | LIPPENS M.H. |

EPO FORM 1503 03.82 (P0401)

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## ⊠ LACK OF UNITY OF INVENTION

The Search Division considers that the present European patent application does not comply with the requirement of unity of invention and relates to several inventions or groups of inventions,

namely:

```
1. Claims 1,2,4-8,10,11: Stainless steel foil
                         Fe-Cr-Al (claim 4 limited
                         to claims 1 or 2; claims 10 and
                         11 referring only to claim 8)

2. Claims 3,9: Stainless steel foil Fe-Ni-Cr-Al
```

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

⊠ None of the further search fees has been paid within the fixed time limit. The present European search report has been drawn up for those parts of the European patent application which relate to the invention first mentioned in the claims,

namely claims:  1,2,4-8,10,11